(19) Europäisches Patentamt
European Patent Office
Office européen des brevets

(11) Publication number: **0 083 123**
**A1**

(12) **EUROPEAN PATENT APPLICATION**

(21) Application number: 82201573.1

(22) Date of filing: 10.12.82

(51) Int. Cl.³: C 07 F 9/09
C 07 F 9/165, C 07 F 9/65
C 10 M 1/46

(30) Priority: 29.12.81 US 335435

(43) Date of publication of application:
06.07.83 Bulletin 83/27

(84) Designated Contracting States:
AT BE CH DE FR GB IT LI NL

(71) Applicant: THE PROCTER & GAMBLE COMPANY
301 East Sixth Street
Cincinnati Ohio 45201(US)

(72) Inventor: Bullock, Steven S.
10830 Lake Thames
Cincinnati Ohio 45242(US)

(72) Inventor: Howie, John K.
1387 S. Nixon Camp Road
Oregonia Ohio 45054(US)

(74) Representative: Gibson, Tony Nicholas et al,
Procter & Gamble (NTC) Limited Whitley Road
Longbenton Newcastle upon Tyne NE12 9TS(GB)

(54) **Alphaphoshato amide compounds and lubricant and hydrocarbon fuel compositions containing them.**

(57) Alpha-phosphato amides useful as antiwear additives for lubricants and liquid hydrocarbon fuels are disclosed. Alpha-dithiophosphato amides and alpha-thiophosphato amides containing sulfur at the alpha position are also useful as extreme pressure additives. Non-sulfur containing alpha phosphato amides and alpha-thiophosphato amides containing oxygen at the alpha position are also useful as friction-reducing additives. The compounds are non-corrosive and effective at relatively low concentrations when compared with common phosphorus-based additives.

EP 0 083 123 A1

0083123

# ALPHAPHOSPHATO AMIDE COMPOUNDS AND LUBRICANT AND HYDROCARBON FUEL COMPOSITIONS CONTAINING THEM

Steven S. Bullock
John K. Howie

## TECHNICAL FIELD

The present invention relates to alpha-phosphato amide compounds which are useful as antiwear additives for lubricant compositions and liquid hydrocarbon fuels. Alpha-dithiophosphato amides and alpha-thiophosphato amides herein containing sulfur at the alpha position are also useful as extreme pressure additives for lubricants, while the non-sulfur containing alpha-phosphato amides and alpha-thiophosphato amides herein containing oxygen at the alpha position are also useful as friction-reducing additives for lubricants and fuels. The compounds are non-corrosive and effective at relatively low concentrations when compared with common phosphorus-based additives.

## BACKGROUND ART

U.S. Patent 2,973,380, Swern, issued February 28, 1961, discloses alpha-phosphono acid ester plasticizer compounds. In the form of partially hydrolyzed alpha-dialkylphosphono carboxylic acids, the compounds are said to be useful in making lubricant greases.

U.S. Patent 2,185,541, Cahn, issued January 2, 1940, describes a wide variety of alpha-substituted carboxylic acids as interface modifying agents. The hydrophilic group at the alpha position generally is an oxygenated sulfur or phosphorus group, and can be phosphonic acid. The patent also states that the carboxyl group of the acid can be esterified or converted to an amide.

U.S. Patent 2,363,510, Farrington et al., issued November 28, 1944, discloses alpha-, beta- and gamma-substituted carboxylate salts as non-corrosive detergent additives for lubricants. The substituents must contain either nitrogen, phosphorus, arsenic, antimony or bismuth, and can be phospho and phosphonato groups.

U.S. Patent 3,830,885, Petersen, issued August 20, 1974, discloses certain dialkyl carbamylphosphonates useful as

intermediates in the preparation of dialkyl N,N-dialkoxymethyl carbamylphosphonate flameproofing additives.

German Patent 27 56 488, Schmidt et al., published June 29, 1978, discloses dithiophosphato acid and amide compounds which are said to be useful as non-corrosive, extreme pressure additives for lubricants.

Zinc dialkyl dithiophosphates are commonly used in lubricants as antiwear additives, antioxidants and, to a lesser degree, as extreme pressure additives. However, since these compounds do not reduce friction between moving surfaces, and can even increase friction under certain conditions, lubricants containing them often also require special additives to minimize energy losses due to friction. In order to reduce friction and thereby improve fuel efficiency, crankcase lubricants have recently been prepared using low-viscosity base oils. However, current antiwear additives do not provide adequate wear protection in such low-viscosity oils. New antiwear additives which provide lower phosphorus levels than the zinc dialkyl dithiophosphates are also needed for crankcase lubricants in order to reduce phosphorus poisoning of catalytic converters and other emission control equipment. Finally, more effective additives for liquid hydrocarbon fuels are needed to reduce wear and friction in fuel pumps and the upper cylinders of internal combustion engines.

While some alpha-phosphono carboxylic acids and esters known in the art could provide antiwear and friction-reducing benefits in lubricants and fuels, it has been found that they are generally too corrosive to be used in such compositions. Thus, there is a continuing need for the development of improved antiwear additives for lubricants and fuels.

## SUMMARY OF THE INVENTION

The present invention encompasses compounds of the formula

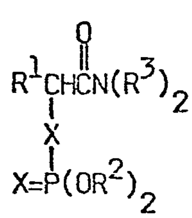

wherein each X is S or O; $R^1$ is a $C_6$-$C_{20}$ hydrocarbyl group; each $R^2$ is hydrogen or a $C_1$-$C_{12}$ hydrocarbyl group; each $R^3$ is hydrogen or a $C_1$-$C_{12}$ hydrocarbyl group, or the $R^3$ substituents are joined to form a $C_4$-$C_6$ heteroring with the nitrogen atom; provided that the total number of carbon atoms in the $R^1$, $R^2$ and $R^3$ substituents is from 10 to 36.

The invention also encompasses lubricant compositions, liquid hydrocarbon fuels, and additive compositions therefor, containing the above compounds.

## DETAILED DESCRIPTION OF THE INVENTION

The alpha-phosphato amides of the present invention are useful as antiwear additives for lubricant compositions and liquid hydrocarbon fuels. Compounds herein containing sulfur at the alpha position are useful as extreme pressure additives for lubricants, while those containing oxygen at the alpha position are also useful as friction-reducing additives for lubricants and fuels. The alpha-phosphato amides herein are non-corrosive when compared with corresponding acids and esters, and effective at relatively low concentrations when compared with other phosphorus-based additives, such as the zinc dialkyl dithiophosphates. Thus, the compounds can provide lower levels of phosphorus in crankcase lubricants and fuels, and thereby reduce phosphorus poisoning of catalytic converters and other emission control equipment.

While not intending to be limited by theory, it is believed that the highly polar nature of the present compounds causes them to more readily adsorb at metal surfaces than do compounds such as the zinc dialkyl dithiophosphates. It is believed that mechanical and thermal energy can break the bond between the phosphorus atom and the sulfur or oxygen atom at the alpha position in the present compounds, freeing some of the phosphorus and sulfur, when present, to chemically react with metal surfaces and form a stable antiwear film. Compounds herein containing sulfur at the alpha position also function as extreme pressure additives under heavily-loaded conditions, while those containing oxygen at the alpha position also provide low coefficients of friction and function as friction-reducing agents. The compounds are also thought to provide

some detergency, corrosion inhibition, and metal deactivation benefits when added to lubricants and fuels.

In the general formula for the compounds herein, each X can be S or O. However, the alpha-dithiophosphato amides (i.e., compounds in which each X is S) are preferred.

The $R^1$ substituent in the general formula can be any $C_6$-$C_{20}$ hydrocarbyl group. (As used herein, "hydrocarbyl" is intended to include straight and branched chain alkyl, alkenyl, alkynyl, cycloalkyl, cycloalkenyl, aryl, arylalkyl, alkylaryl and the like groups. It also includes substituted hydrocarbyl groups in which the substituent can be, for example, a chloro, fluoro, bromo, nitro, ethoxy, polyethoxy, propoxy, hydroxy, pentylthio or mercapto group.) Highly preferred compounds herein are those in which $R^1$ is a $C_8$-$C_{16}$ alkyl group.

Each $R^2$ substituent in the general formula for the present compounds can be hydrogen or a $C_1$-$C_{12}$ hydrocarbyl group, but preferably a $C_1$-$C_8$ hydrocarbyl group.

Each $R^3$ in the general formula for the present compounds can be hydrogen or a $C_1$-$C_{12}$ hydrocarbyl group. The $R^3$ substituents can also be joined to form a $C_4$-$C_6$ heteroring with the nitrogen atom, such as an azetidine, pyrrolidine, piperidine or morpholine ring. Highly preferred compounds herein are those in which each $R^3$ is hydrogen. These primary amides generally provide greatest antiwear, extreme pressure or friction-reducing benefits.

It will be appreciated that the above substituents should be selected such that the compounds herein exhibit sufficient solubility for their intended use. Thus, the total number of carbon atoms in the $R^1$ and $R^2$ and $R^3$ substituents should be from 10 to 36, preferably from 12 to 24.

A particularly preferred compound herein is alpha-(diisopropyl dithiophosphato)lauramide (i.e., in the general formula, each X is S, $R^1$ is a $C_{10}$ alkyl group, each $R^2$ is an isopropyl group and each $R^3$ is hydrogen). Examples of other preferred primary amides are alpha-(diisopropyl dithiophosphato)stearamide, alpha-(dimethyl dithiophosphato)lauramide, the alpha-(dimethyl dithiophosphato)amide of tallow fatty acid, the alpha-(diisopropyl dithiophosphato)amide of coconut fatty acid and alpha-(di-2-ethylhexyl

dithiophosphato)lauramide. Other compounds useful herein are alpha-phosphatolauramide, alpha-(monomethyl dithiophosphato)stearamide, alpha-S-(di-2-ethylhexyl thiophosphato)caprylamide, alpha-S-(dilauryl thiophosphato)lauramide, alpha-(methyl ethyl dithiophosphato)oleamide, N,N-dimethyl-alpha-O-(diisopropyl thiophosphato)lauramide, N-monomethyl-alpha-O-(dimethyl thiophosphato)stearamide, N,N-dioctyl-alpha-(dihydroxyethyl phosphato)caprylamide, N-[alpha-(diisopropyl dithiophosphato)lauroyl]morpholine, and N-[alpha-(dimethyl phosphato)stearoyl]piperidine.

The compounds of the present invention can be effectively employed as antiwear, extreme pressure or friction-reducing additives in a wide variety of lubricant compositions, including greases obtained therefrom. The compounds are particularly suitable for use in crankcase lubricants prepared for spark-ignited and compression-ignited internal combustion engines, including automobile and truck engines, two-cycle engines, aviation piston engines, marine and low-load diesel engines, and the like. The compounds are also useful as additives for automatic transmission fluids, turbine lubricating oils, hydraulic fluids, gear oils, metal-working lubricants, cutting oils, transaxle lubricants and similar lubricating oil and grease compositions. The alpha-dithiophosphato amides and alpha-thiophosphato amides herein containing sulfur at the alpha position are preferred for use in gear oils, metal-working lubricants, cutting oils, transaxle lubricants, and similar lubricants which encounter more heavily-loaded conditions, since they function as extreme pressure additives.

Lubricant compositions herein can be prepared by a variety of methods known in the art. Typically, a concentrated solution or substantially stable suspension of the present compounds will be prepared for addition to a base lubricating oil or to an otherwise fully formulated lubricant composition. Such a concentrated lubricant additive composition can comprise from 5% to 90%, preferably from 20% to 60%, by weight of the compounds herein and from 10% to 95%, preferably from

30% to 70%, by weight of a lubricant additive carrier material. The carrier material can be selected from any of the substantially inert liquid hydrocarbon solvents and diluents known in the art, including the natural and synthetic base lubricating oils hereinafter described, kerosene, xylene, benzene and mixtures thereof. The carrier is preferably a mineral or synthetic oil, or mixtures thereof.

Lubricant additive compositions herein can also contain from 5% to 80%, preferably from 20% to 60%, by weight of other additives typically found in lubricants. Such additives include ashless dispersants, detergents, oxidation inhibitors, corrosion inhibitors, extreme pressure agents, rust inhibitors, pour point depressants, viscosity index improvers, foam inhibitors, supplemental antiwear and friction-reducing agents, and mixtures thereof. These optional additives are more fully described in U.S. Patent 4,199,463, Ryer et al., issued April 22, 1980, particularly from column 10, line 16 through column 11, line 37.

Fully formulated lubricant compositions herein comprise from 0.01% to 10%, preferably from 0.1% to 5%, by weight of the present compounds and a major amount, preferably from 70% to 95% by weight, of a base lubricating oil. The base oil can be derived from either natural or synthetic sources. Suitable natural oils include animal oils, such as lard oil; vegetable oils, such as castor oil; and mineral oils, such as solvent-treated or acid-treated mineral oils of the paraffinic, naphthenic, and mixed paraffinic-naphthenic types. Oils of lubricating viscosity derived from coal or shale are also useful herein. The mineral lubricating oils are usually preferred because of their availability and low cost.

Synthetic base lubricating oils are also preferred for use in the present compositions. Synthetic oils are described in U.S. Patent 4,208,357, Hoke, issued June 17, 1980, particularly from column 9, line 52 to column 10, line 37, and are generally synthetic hydrocarbon oils, polyalkylene oxide oils, polyacetal oils, polysilicone oils or synthetic ester oils.

Preferred synthetic oils for use herein include the alkylbenzenes and liquid polymers of alpha-olefins, having a viscosity of less than 80 SUS at 100°C. Particularly preferred are the hydrogenated liquid oligomers of $C_6$-$C_{12}$ alpha-olefins, such as alpha-decene trimer and tetramer. Other preferred synthetic oils are the esters made from monohydric alcohols and polycarboxylic acids, such as didodecyl adipate, di-(2-ethylhexyl)adipate, dilauryl sebacate, and the esters made from polyhydric alcohols and monocarboxylic acids, such as trimethylol propane tripelargonate and pentaerythritol tetracaproate. Particularly preferred are the pentaerythritol, neopentyl glycol and trimethylol propane esters of $C_7$-$C_9$ acids. Blends of mineral and synthetic oils, such as those containing 5-25% by weight of hydrogenated alpha-decene trimer or of di-(2-ethylhexyl)adipate and 75-95% by weight of 150 SUS (38°C) mineral oil, are also useful herein, especially for preparing low viscosity motor oils (e.g. SAE 5W 20).

Fully formulated lubricant compositions herein preferably also contain from 0.01% to 30%, more preferably from 1% to 20%, by weight of other additives typically found in lubricants, such as those described above for use in lubricant additive compositions.

Preferred crankcase lubricants herein comprise from 80% to 95% by weight of a mineral or synthetic base oil, or mixtures thereof, from 5% to 20% by weight of the above conventional additives, and from 0.1% to 2% by weight of the present compounds.

The compounds of the present invention can also be used as antiwear additives for a wide variety of liquid hydrocarbon fuels, including gasoline, alcohols, especially methanol, ethanol and mixtures thereof with gasoline, oxygenated octane improvers, synthetic fuels derived from coal or shale, kerosene, diesel fuels, No. 2 fuel oil and other middle distillates characaterized by boiling within the range of 120°C to 500°C. Compounds herein containing oxygen at the alpha position can also be used as friction-reducing additives in the above fuels.

Concentrated fuel additive compositions herein comprise from

0.5% to 90%, preferably from 20% to 60%, by weight of the present compounds, and from 10% to 99.5%, preferably from 30% to 70%, by weight of a fuel additive carrier material. The carrier material can be selected from any of the liquid hydrocarbon fuels herein, as well as any of the substantially inert liquid hydrocarbon solvents and diluents known in the art, such as natural and synthetic base lubricating oils, kerosene, xylene, benzene and mixtures thereof. In addition, such fuel additive compositions can contain from 5% to 80%, preferably from 20% to 60%, by weight of other conventional additives. These include dyes, antioxidants, detergents, preignition/antiknock additives, anti-icing additives for gasoline, pour point depressants and cold flow improvers for the middle distillate fuels, and supplemental antiwear and friction-reducing additives.

Fully formulated fuels herein comprise from 0.0001% to 0.5%, preferably from 0.001% to 0.1%, by weight of the present compounds and a major amount, preferably at least 98% by weight, of the fuel. Such compositions will also generally contain minor amounts, e.g., less than 2% by weight, of the above conventional fuel additives.

The following non-limiting examples illustrate the compounds and compositions of the present invention.

All percentages, parts, and ratios used herein are by weight unless otherwise specified.

EXAMPLE I

A preferred compound of the present invention, alpha-(diisopropyl dithiophosphato)lauramide, was prepared as follows. The alpha-chlorolauric acid starting material was obtained by the process disclosed in U.S. Patent 4,148,811, Crawford, issued April 10, 1979. Additionally, a preferred process for preparing 1,4-bis(dicyanomethylene) cyclohexane, the precursor of the tetracyanoquinodimethane (TCNQ) used in the above process, is disclosed in U.S. Patent 4,229,364, Crawford, issued October 21, 1980.

Step 1: Preparation of alpha-chlorolauramide:

235 g (1.0 mole) of alpha-chlorolauric acid was combined in a 2 liter flask with 357 (3 moles) of thionyl chloride. The miture was refluxed for 18 hours. The excess thionyl chloride was then distilled off using an aspirator vacuum. The residue was dissolved in freshly distilled tetrahydrofuran and added to a 2 liter flask containing 500 ml of condensed ammonia. The reaction mixture was allowed to stand and warm to room temperature. The excess ammonia was then drived off on a steam bath and the residue triturated with chloroform. The hot chloroform solution was filtered to remove insoluble ammonium chloride and then flash evaporated. The residue was recrystallized twice from hexane, yielding 220 g (94%).

Step 2: Preparation of alpha-bromolauramide:

11.7 g (0.05 mole) of alpha-chlorolauramide and 8.7 (0.10 moles) of lithium bromide were combined in a 250 ml flask in 110 ml of butyronitrile. The mixture was stirred at reflux for 20 hours. The mixture was then poured into distilled water and extracted with ether. The ether solution was dried over magnesium sulfate and flash evaporated. The product was recrystallized twice from 100 ml of hexane in a refrigerator. The yield of 10.6 g was shown by GC analysis to be 86% alpha-bromolauramide and 14% alpha-chlorolauramide (m.p. 64-65.5°C).

Step 3: Preparation of diisopropyl dithiophosphoric acid:

222 g (1.0 mole) of phosphorus pentasulfide was suspended in 1 liter of benzene in a 2 liter flask at 80°C. The mixture was stirred as 240 g (4 moles) of isopropyl alcohol was added over a 1 1/2 hour period. Evolved hydrogen sulfide was bubbled through a sodium hydroxide solution. The mixture was then refluxed for 2 hours. A small amount of precipitate was collected and the benzene distilled off at atmospheric pressure. The produce was distilled using a 6 inch vigreaux column and a vacuum of 2 mm (b.p. 70-80°C).

Step 4: Preparation of alpha-(diisopropyl dithiophosphato) lauramide:

13.9 g (0.05 mole) of alpha-bromolauramide, 10.7 g (0.05 mole) of diisopropyl dithiophosphoric acid, and 120 ml of isopropyl

alcohol were combined in a 250 ml flask and heated to 80°C. 5 g. (0.05 mole) of triethylamine was added and the mixture stirred at 80°C for 18 hours. The mixture was dissolved in 500 ml of ether and washed twice with a 10% sodium chloride solution. The ether layer was dried over magnesium sulfate, filtered and flash evaporated. The residue weighed 20 g (97% yield) and crystallized on standing.

Other compounds herein can be obtained when the alpha-chlorolauric acid is replaced with other alpha-chloro acids derived from, for example, caprylic acid, capric acid, myristic acid, palmitic acid, stearic acid, oleic acid, eicosanoic acid, mixed coconut oil fatty acids, mixed palm oil fatty acids, mixed lard fatty acids, mixed soybean oil fatty acids, and mixed tallow fatty acids.

Other compounds of the present invention can be prepared by the above procedure by replacing the ammonia in Step 1 with morpholine, piperidine, pyrrolidine, methylamine, dimethylamine, and a variety of other primary and secondary amines.

Alpha-phosphato amides herein can be prepared by the above procedure by replacing the dithiophosphoric acid of Step 3 with the corresponding phosphoric acid. Alpha-thiophosphato amides herein containing oxygen at the alpha position can be prepared, for example, by reacting a dialkoxy thiophosphoryl chloride with an alpha-hydroxy amide under basic conditions. Alpha-thiophosphato amides herein containing sulfur at the alpha position can be prepared by reacting a dialkyl phosphorochloridate with an alpha-thio amide under basic conditions.

EXAMPLE II

Crankcase lubricants of the present invention are as follows:

| Component | Wt. % | | | | |
|---|---|---|---|---|---|
| | A | B | C | D | E |
| SAE 30 mineral oil | 92.4 | 90.1 | | | |
| 100 N mineral oil | | | 59.4 | | |
| 150 N mineral oil | | | | 88.30 | |
| Alpha-decene trimer | | | 25.0 | | 71.28 |
| Pentaerythritol ester of mixed $C_7$-$C_9$ acids | | | | | 17.72 |

| | | | | | |
|---|---|---|---|---|---|
| Overbased calcium sulfonate (TBN 300) | 2.0 | 1.2 | 1.2 | 0.6 | |
| Overbased magnesium sulfonate (TBN 400) | | 0.8 | 0.8 | 0.4 | |
| Calcium phenate (TBN 240) | | | | | 1.0 |
| N-substituted polyisobutenyl succinimide dispersant | 3.0 | 5.0 | 5.0 | 3.0 | 3.0 |
| 4,4'methylenebis(2,6-di-t-butylphenol) | 1.0 | 0.75 | 1.0 | 1.0 | 1.0 |
| Alkylated diphenylamine antioxidant | | 1.0 | 1.0 | 1.0 | |
| Zinc diamyldithiocarbamate antioxidant | 1.0 | | | | 0.5 |
| Polymethyacrylate viscosity index improver | | | 6.5 | 5.2 | 4.5 |
| Dimethylpolysiloxane foam inhibitor | 0.001 | 0.001 | 0.001 | 0.001 | 0.001 |
| Alpha-(dimethyl dithiophosphato) amide of tallow fatty acid | 0.6 | | | | |
| Alpha-(diisopropyl dithio-phosphato)lauramide | | 1.15 | 0.35 | 0.5 | 0.35 |
| Alpha-(di-2-ethylhexyl phosphato) lauramide | | | 0.35 | | 0.65 |

The above compositions are prepared by heating the mineral or synthetic base oils to 60-65°C and maintaining the temperature under a nitrogen blanket. The viscosity index improvers (if used) are added and mixed with the base oils. The alpha-phosphato amide compounds are then added and the compositions mixed for 1 hour. The antioxidants, dispersants, detergents and foam inhibitors are then separately added, with mixing for one-half hour between additions of the components.

The above compositions can also be prepared by adding concentrated solutions containing 30% by weight of the alpha-phosphato amide compounds and 70% by weight of the indicated mineral or synthetic oils to otherwise fully formulated crankcase lubricants containing the components, except for the

alpha-phosphato amides. The above compositions can also conveniently be prepared by adding concentrated solutions containing 50% by weight of all of the additives and 50% by weight of the mineral or synthetic oils, to base oils which are the mineral or synthetic oils.

EXAMPLE III

An automatic transmission fluid of the present invention is as follows:

| Component | Wt. % |
|---|---|
| 100 N mineral oil | 83.88 |
| 200 N mineral oil | 9.32 |
| N-substituted polyisobutenyl succinimide dispersant | 3.5 |
| Zinc diamyldithiocarbamate antioxidant | 0.5 |
| Dimethylpolysiloxane foam inhibitor | 0.001 |
| Polymethylacrylate viscosity index improver | 2.0 |
| Alpha-(diethyl dithiophosphato)stearamide | 0.8 |

EXAMPLE IV

A marine diesel engine oil is as follows:

| Component | Wt. % |
|---|---|
| 200 N mineral oil | 88.0 |
| Overbased calcium sulfonate (TBN 300) | 5.0 |
| N-substituted polyisobutenyl succinimide dispersant | 5.0 |
| Dimethylpolysiloxane foam inhibitor | 0.001 |
| 4,4'methylenebis(2,6-di-t-butylphenol) | 1.0 |
| Alpha-O-(diisopropyl thiophosphato)myristamide | 1.0 |

EXAMPLE V

A 2-cycle engine oil is as follows:

| Component | Wt. % |
|---|---|
| SAE 30 mineral oil | 96.8 |
| Overbased calcium sulfonate (TBN 300) | 1.5 |
| N-substituted polyisobutenyl succinimide dispersant | 1.5 |
| Isopropanol, $C_8$-$C_{10}$ alcohol coupling agents | 0.1 |
| Alpha-S-(dimethyl thiophosphato)amide of coconut fatty acid | 0.1 |

EXAMPLE VI

A lubricating grease of the present invention is as follows:

| Component | Wt. % |
|---|---|
| SAE 20 mineral oil | 93.5 |
| Calcium tallow fatty acid soap | 10.0 |
| Overbased calcium sulfonate (TBN 300) | 1.5 |
| Normal calcium sulfonate (TBN 30) | 1.0 |
| Sulfurized olefin E.P additive | 3.5 |
| Alkylated diphenylamine antioxidant | 0.5 |
| Alpha-(di-n-butyl dithiophosphato)stearamide | 0.75 |

EXAMPLE VII

An aircraft gas turbine oil is as follows:

| Component | Wt. % |
|---|---|
| Trimethylol propane ester of mixed $C_7$-$C_9$ acids | 96.5 |
| Alkylated diphenylamine antioxidant | 1.0 |
| Polymethacrylate viscosity index improver | 1.0 |
| Alkyl bisulfite hydrolytic stabilizer | 0.25 |
| Zinc diamyldithiocarbamate metal deactivator | 0.25 |
| Alpha-(diphenyl dithiophosphato)lauramide | 1.0 |

EXAMPLE VIII

A gear oil is as follows:

| Component | Wt. % |
|---|---|
| SAE 90 mineral oil | 95.75 |
| Sulfurized olefin E.P. additive | 2.0 |
| Ethylenediamine dinonylnaphthene sulfonate | 0.5 |
| Alpha-(monomethyl dithiophosphato)lauramide | 1.75 |

EXAMPLE IX

A cutting oil herein is as follows:

| Component | Wt. % |
|---|---|
| 200 N mineral oil | 91.75 |
| Sulfurized olefin E.P additive | 8.0 |
| 4,4'methylenebis(2,6-di-t-butylphenol) | 0.25 |
| Alpha-dithiophosphatolauramide | 1.0 |

EXAMPLE X

A concentrated fuel additive composition herein contains 25% by weight of alpha-(diisopropyl phosphato)lauramide and 75% by weight of diesel fuel. It can be added to a fully formulated diesel fuel, at a level providing 0.05% by weight of the alpha-phosphato amide, to reduce wear and friction in internal combustion engines.

Other compositions herein can be obtained by adding 0.001% by weight of the alpha-(diisopropyl phosphato)amide of tallow fatty acid to gasoline or mixtures thereof with ethanol or methanol.

CLAIMS

1. A compound of the formula

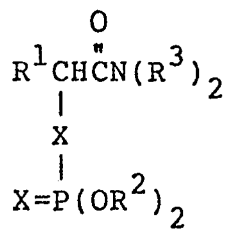

wherein each X is S or O; $R^1$ is a $C_6$-$C_{20}$ hydrocarbyl group; each $R^2$ is hydrogen or a $C_1$-$C_{12}$ hydrocarbyl group; each $R^3$ is hydrogen or a $C_1$-$C_{12}$ hydrocarbyl group, or the $R^3$ substituents are joined to form a $C_4$-$C_6$ heteroring with the nitrogen atom; provided that the total number of carbon atoms in the $R^1$, $R^2$ and $R^3$ substituents is from 10 to 36.

2. A compound according to Claim 1 wherein the total number of carbon atoms in the $R^1$, $R^2$ and $R^3$ substituents is from 12 to 24.

3. A compound according to either one of Claims 1 and 2 wherein $R^1$ is a $C_8$-$C_{16}$ alkyl group, preferably a $C_{10}$ alkyl group.

4. A compound according to any one of Claims 1-3 wherein each $R^2$ is a $C_1$-$C_8$ alkyl group, preferably an isopropyl group.

5. A lubricant additive composition comprising from 10% to 95% by weight of a lubricant additive carrier material and from 5% to 90% by weight of a compound of any one of Claims 1-4.

6. A lubricant additive composition according to Claim 5 further comprising from 5% to 80% by weight of an additive selected from ashless dispersants, detergents, oxidation

inhibitors, corrosion inhibitors, extreme pressure agents, rust inhibitors, pour point depressants, viscosity index improvers, foam inhibitors, supplemental antiwear and friction-reducing agents, and mixtures thereof.

7. A lubricant additive composition according to either one of Claims 5 and 6 wherein the carrier material is a mineral or synthetic oil, or mixtures thereof.

8. A lubricant composition comprising a major amount of a base lubricating oil and from 0.01% to 10% by weight of a compound of the formula of any one of Claims 1-4.

9. A lubricant composition according to Claim 8 further comprising from 0.01% to 30% by weight of an additive selected from ashless dispersants, detergents, oxidation inhibitors, corrosion inhibitors, extreme pressure agents, rust inhibitors, pour point depressants, viscosity index improvers, foam inhibitors, supplemental antiwear and friction-reducing agents, and mixtures thereof.

10. A crankcase lubricant composition according to Claim 9 comprising from 80% to 95% by weight of a mineral or synthetic base oil, or mixtures thereof, from 5% to 20% by weight of the additive and from 0.1% to 2% by weight of the compound.

11. A liquid hydrocarbon fuel additive composition comprising from 10% to 99.5% by weight of a fuel additive carrier material and from 0.5% to 90% by weight of a compound of any one of Claims 1-4.

12. A composition comprising a major amount of liquid hydrocarbon fuel and from 0.0001% to 0.5% by weight of a compound of any one of Claims 1-4.

European Patent Office

# EUROPEAN SEARCH REPORT

Application number

EP 82 20 1573

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A- 808 853 (MONTECATINI SOCIETA GENERALE PER L'INDUSTRIA MINERARIA E CHIMICA) *Complete specification, examples 2,3,4,9,10,11* | 1,2 | C 07 F 9/09<br>C 07 F 9/165<br>C 07 F 9/65<br>C 10 M 1/46 |
| D,Y | DE-A-2 756 488 (CIBA-GEIGY) *Complete specification* | 1,3-12 | |
| D,Y | US-A-2 363 510 (B.B.FARRINGTON) *Complete specification* | 1,3-12 | |
| D,A | US-A-2 185 541 (F.J.CAHN) *Complete specification* | 1 | |

TECHNICAL FIELDS SEARCHED (Int. Cl. 3)

C 07 F 9/00

The present search report has been drawn up for all claims

| Place of search | Date of completion of the search | Examiner |
|---|---|---|
| THE HAGUE | 09-03-1983 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document